# EUROPÄISCHE PATENTANMELDUNG

(11) **EP 2 975 299 A1**
(43) Veröffentlichungstag der Anmeldung: **20.01.2016**
(21) Anmeldenummer: 14177658.3
(22) Anmeldetag: 18.07.2014
(51) Int. Cl.: F16H 57/08

(54) **Gleitlagerung für Planetenträger**

(71) Anmelder: Siemens Aktiengesellschaft, 80333 München (DE)
(72) Erfinder: Klein-Hitpass, Arno, 52074 Aachen (DE); Rohde, Joachim, 52070 Aachen (DE); Trogrlic, Boris, 52080 Aachen (DE)

(57) **Zusammenfassung**

Die Erfindung betrifft ein Planetengetriebe, insbesondere für eine Windkraftanlage, mit einem Getriebegehäuse (1), einem zentralen Sonnenrad (2), das in dem Getriebegehäuse (1) um eine zentrale Getriebeachse (X) rotierbar gehalten ist und eine Außenverzahnung (2a) trägt, einem Hohlrad (3), das konzentrisch zu der zentralen Getriebeachse (X) in dem Getriebegehäuse (1) angeordnet ist und eine Innenverzahnung (3a) aufweist, einem Planetenträger (4), der in dem Getriebegehäuse (1) um die zentrale Getriebeachse (X) drehbar gelagert ist, und mehreren Planetenrädern, die über Planetenradlager (9) an dem Planetenträger (10) um Planetenträgerachsen (11) drehbar gelagert sind und Außenverzahnungen (4a) aufweisen, die mit der Innenverzahnung (3a) des Hohlrads (3) und der Außenverzahnung (2a) des Sonnenrads (2) in Eingriff stehen, dadurch gekennzeichnet, dass der Planetenträger (4) über wenigstens ein segmentiertes Radialgleitlager (8) an dem Getriebegehäuse (1) abgestützt ist, das radial außerhalb der Planetenträgerachsen (11) positioniert und in Umfangsrichtung mehrere beanstandet voneinander angeordnete Radialgleitlagersegmente (8a, 8b, 8c) umfasst.

## Beschreibung

Die vorliegende Erfindung betrifft Planetengetriebe, insbesondere für eine Windkraftanlage, mit einem Getriebegehäuse, einem zentralen Sonnenrad, das in dem Getriebegehäuse um eine zentrale Getriebeachse rotierbar gehalten ist und eine Außenverzahnung trägt, einem Hohlrad, das konzentrisch zu der zentralen Getriebeachse in dem Getriebegehäuse angeordnet ist und eine Innenverzahnung aufweist, einem Planetenträger, der in dem Getriebegehäuse um die zentrale Getriebeachse drehbar gelagert ist, und mehreren Planetenrädern, die über Planetenradlager an dem Planetenträger um Planetenträgerachsen drehbar gelagert sind und Außenverzahnungen aufweisen, die mit der Innenverzahnung des Hohlrads und der Außenverzahnung des Sonnenrads in Eingriff stehen.

Moderne Windkraftanlagen unterscheiden sich äußerlich kaum. Die Unterschiede liegen im Wesentlichen in der Ausgestaltung der Getriebe, die zwischen dem Rotor und dem Generator vorgesehen sind, um die geringe Rotationsgeschwindigkeit der Rotornabe in eine höhere Drehgeschwindigkeit für den Generator umzusetzen. Für große Anlagen sind Übersetzungsverhältnisse von 1:100 üblich. Um solch große Übersetzungsverhältnisse zu realisieren, kommen in der Regel mehrstufige Getriebe zum Einsatz. Dabei wird in den gängigen Antriebskonzepten eine Kombination aus Planetengetriebestufen und Stirnradgetriebestufen bevorzugt, wobei in den ersten, drehmomentstarken Getriebestufen häufig schräg verzahnte Planetengetriebe für eine kompakte Bauweise zum Einsatz kommen, während in der anschließenden Hochleistungsstufe ein schräg verzahnte Stirnradgetriebe verwendet wird.

Dabei ist die Rotorwelle bzw. Rotornabe mit dem Planetenträger der ersten Stufe verbunden. Dieser ist an zwei Positionen auf axial gegenüberliegenden Seiten der Planetenräder - d.h. an der Antriebsseite und an der Abtriebsseite der Getriebestufe - in dem Getriebegehäuse gelagert und treibt die Planetenräder an. Alternativ ist auch eine einseitige Lagerung möglich. Das Hohlrad ist fest mit dem Getriebegehäuse verbunden, so dass es zu einer umlaufenden Bewegung der Planetenräder im Getriebe kommt. Das Drehmoment wird von den Planetenrädern auf das Sonnenrad übertragen, welches über ein Zahnwellenprofil mit dem Planetenträger der zweiten Stufe verbunden ist. Der Vorgang der zweiten Planetenstufe ist identisch mit der ersten Stufe. In der letzten Getriebestufe findet durch das vom Sonnenrad der zweiten Stufe angetriebene Stirnrad eine weitere Übersetzung statt, so dass eine Übersetzung von einer anfangs kleinen Drehzahl der Rotorwelle bei hohem Drehmoment auf eine hohe Drehzahl bei kleinem Drehmoment der Generatorwelle stattfindet.

Bei herkömmlichen Planeten-Getrieben und Planeten-Stirnradgetrieben für Windkraftanlagen werden in erster Linie Wälzlager eingesetzt, um die Planetenräder in dem Planetenradträger sowie den Planetenradträger in dem Getriebegehäuse zu lagern.

Vereinzelt kommen auch hydrodynamische betriebene Gleitlager zur Anwendung. Bekannte Gleitlagerwerkstoffe, die hier zum Einsatz kommen, sind beispielsweise Weißmetalle mit Legierungsbestandteilen und Bonze-Legierungen. Im Allgemeinen werden Gleitlager in Industrieanwendungen mit einem Schmierspalt von etwa 15 bis 20 µm bezogen auf den Durchmesser im Betriebspunkt ausgelegt. Als zulässiger mittlerer dynamischer Druck wird von Lagerherstellern wenigstens 5 MPa für Weißmetall angegeben.

Der Einsatz von Gleitlagern ist allerdings relativ selten. Gründe hierfür sind vielfach vorherrschende instationäre Betriebsbedingungen und temporär äußerst niedrige Gleitgeschwindigkeiten bei gleichzeitig extremer Beanspruchung der Gleitlager. Herkömmliche Gleitlager werden vor allem bei Einsatzbedingungen mit hohen bis sehr hohen Drehzahlen verwendet. Aufgrund dessen werden üblicherweise für Lagerstellen in Windkraftgetrieben nahezu ausschließlich Wälzlager verwendet.

Unabhängig davon, ob Wälzlager oder Gleitlager eingesetzt werden, wird versucht den Betrieb innerhalb der Mischreibung durch Schmiermaßnahmen zu vermeiden und auf diese Weise den Verschleiß an den Lagerstellen so gering wie möglich zu halten. Die zu treffenden Maßnahmen zur Schmierung und Kühlung der Getriebebauteile insbesondere im Bereich der Lagerstellen sind jedoch sehr aufwendig. Außerdem unterliegen alle Lagerstellen trotz aller Gegenmaßnahmen aufgrund der hohen Belastungen und den vom Rotor der Windkraftanlage vorgegebenen geringen Drehzahlen um die eigene Achse einem milden Verschleiß, da sie regelmäßig im Mischreibungsgebiet arbeiten. Der vorhandene, noch nicht gefilterte Abrieb der Zahnräder beschleunigt den Verschleiß an den Kontaktflächen noch und begrenzt so die Lebensdauer der Lagerstellen.

Aufgabe der Erfindung ist es daher, ein Planetengetriebe insbesondere für Windkraftanlagen so auszugestalten, dass die Pflege und/oder Wartung vereinfacht wird.

Diese Aufgabe ist bei einem Planetengetriebe der eingangs genannten Art dadurch gelöst, dass der Planetenträger über wenigstens ein segmentiertes Radialgleitlager an dem Getriebegehäuse abgestützt ist, das radial außerhalb der Planetenträgerachsen positioniert und in Umfangsrichtung mehrere beanstandet voneinander angeordnete Radialgleitlagersegmente umfasst.

Der Erfindung liegt damit die Überlegung zugrunde, segmentierte Radialgleitlager zu verwenden, deren Segmente einfach ausgetauscht werden können, ohne das Planetengetriebe zerlegen und/oder ausbauen zu müssen. Hierfür besteht das Radialgleitlager aus mehreren, insbesondere aus drei separaten Radialgleitlagersegmenten, die den Planetenträger möglichst im Bereich von dessen äußerem Durchmesser abstützen. Durch die Verlegung der Lagerposition des Radialgleitlagers nach außen sowie dessen geteilte Ausführung wird die Möglichkeit geschaffen, verschlissene Lager auszutauschen. Auch wird grundsätzlich die Möglichkeit eröffnet, die einzelnen separaten Radialgleitlagersegmente ggf. in radialer Richtung nach zu justieren, um einen Lagerverschleiß auszugleichen.

Grundsätzlich kann der Planetenträger auf beiden Seiten der Planetenräder über segmentierte Radialgleitlager an dem Getriebegehäuse abgestützt sein. Erfindungsgemäß braucht allerdings nur ein Lager und hier insbesondere das auf der Abtriebsseite des Planetengetriebes liegende Lager radial außerhalb der Planetenachsen positioniert zu sein. Das andere segmentierte Radialgleitlager kann ebenfalls außen liegen, aber auch an einer weiter radial innen gelegenen Position vorgesehen sein.

Gemäß einer Ausführungsform der Erfindung ist vorgesehen, dass der Planetenträger auf axial gegenüberliegenden Seiten der Planetenräder an dem Getriebegehäuse gelagert ist und auf der Abtriebsseite des Planetengetriebes über ein segmentiertes Radialgleitlager radial außerhalb der Planetenträgerachsen an dem Getriebegehäuse abgestützt ist.

Die Radialgleitlagersegmente des Radialgleitlagers sind zweckmäßigerweise an der Außenseite des Getriebegehäuses montiert, wobei sie radiale oder axiale Durchbrüche in dem Getriebegehäuse durchgreifen, um mit ihrer Innenfläche an den Planetenträger in Kontakt zu kommen. Diese Ausgestaltung eröffnet die Möglichkeit, die Radialgleitlagersegmente von außen an dem Getriebegehäuse zu montieren, so dass sie leicht zugänglich sind. Ebenso besteht von außen die Möglichkeit, eine Justierung der Position der Radialgleitlagersegmente insbesondere in radialer Richtung vorzunehmen. Beispielsweise kann durch die Verwendung von Unterlegscheiben die radiale Position der Radialgleitlagersegmente auf einfache Weise verändert werden. Es können auch andere Justiermittel zur Einstellung der (radialen) Position der Radialgleitlagersegmente vorgesehen sein.

Gemäß einer bevorzugten Ausführungsform der Erfindung ist vorgesehen, dass die Radialgleitlagersegmente jeweils an der Innenseite einer zugeordneten Trägerplatte montiert sind, welche außenseitig an dem Getriebegehäuse montiert, insbesondere festgeschraubt ist. Dabei können zwischen den Trägerplatten und den zugeordneten Radialgleitlagersegmenten Dichtungsplatten vorgesehen sein.

In Weiterbildung der Erfindung können die Radialgleitlagersegmente an einem als Drehmomentstütze ausgebildeten Bauteil des Getriebegehäuses vorgesehen sein, d.h. an dem Bauteil, über welches das Getriebe mit der Hauptplattform der Windkraftanlage verbunden wird, um eine Rotation des Getriebes durch das Antriebsmoment zu verhindern.

Grundsätzlich ist es möglich, die Radialgleitlagersegmente so auszubilden und/oder zu positionieren, dass sie den Planetenträger auch axial gegenüber dem Getriebegehäuse abstützen. In bevorzugter Weise erfolgt die axiale Abstützung jedoch durch separate Axialgleitlager. Gemäß einer bevorzugten Ausführungsform der Erfindung ist dabei vorgesehen, dass ein Einsatzring in das Getriebegehäuse, insbesondere in das als Drehmomentstütze ausgebildete Bauteil des Getriebegehäuses, von der Abtriebsseite des Planetengetriebes her eingesetzt ist und der Planetenträger an dem Einsatzring, insbesondere einem radial nach außen vorstehenden Schenkel des Einsatzrings, durch ein Axialgleitlager axial abgestützt ist. Dabei kann das Axialgleitlager als Gleitring ausgebildet sein. Auf der Antriebsseite des Planetengetriebes kann der Planetenträger durch ein segmentiertes Radialgleitlager abgestützt sein, das an einem Flansch des Getriebegehäuses montiert ist. Die Radiallagersegmente können hier in bereits beschriebener Weise direkt oder über Dichtungselemente an Trägerplatten fixiert sein, die an dem Getriebegehäuse montiert, insbesondere festgeschraubt sind. Ferner kann der Planetenträger an dem Getriebegehäuse auf der Antriebsseite des Planetengetriebes durch ein Axialgleitlager, insbesondere einen Axialgleitring abgestützt sein. Dieser kann an einem Ringelement gehalten sein, das in das Getriebegehäuse, insbesondere in den Deckel des Getriebegehäuses eingesetzt ist.

Die Radial- bzw. Axialgleitlager bestehen im Bereich ihrer Gleitflächen aus geeigneten Gleitlagerwerkstoffen, wie sie an sich bekannt sind. Insbesondere können Kupfer-Zink- Legierungen oder Kupfer-Zinn-Legierungen zum Einsatz kommen. Dabei werden vorzugsweise Kupfer-Zink-Legierungen mit einem Zinkanteil zwischen 6% und 40% oder Kupfer-Zinn-Legierungen mit einem Zinnanteil zwischen 4% und 12% verwendet. Denkbar sind auch Aluminium-Zinn-Legierungen, wobei diese dann bevorzugt einen Zinnanteil zwischen 6% und 40% aufweisen. Der Gleitlagerwerkstoff kann auf die Trägerplatte walzplattiert sein. Ebenso ist es möglich, die Gleitflächen der eingesetzten Gleitlager mit einer PVD-Beschichtung zu versehen. Zweckmäßigerweise kann das Gleitlager in einer obersten Beschichtungsebene auch eine synthetische Einlaufschicht besitzen.

Nachfolgend wird ein Ausführungsbeispiel der Erfindung unter Bezugnahme auf die beiliegende Zeichnung beschrieben. In der Zeichnung zeigt:
- FIG 1: eine Ausführungsform eines erfindungsgemäßen Planetengetriebes in schematischer Schnittansicht,

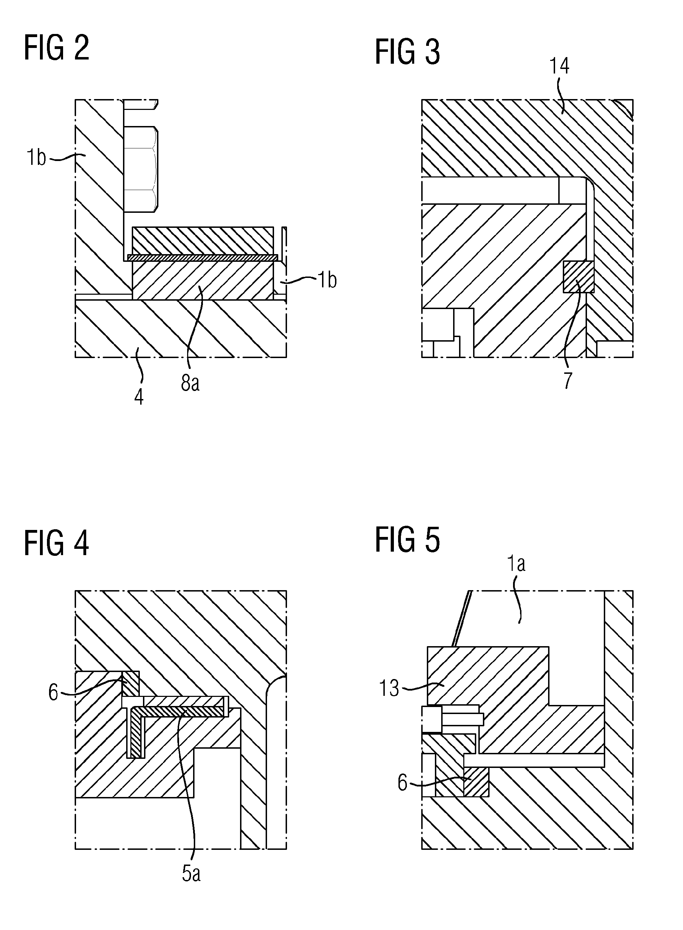

- FIG 2: den Ausschnitt A aus Figur 1 in vergrößerter Darstellung,
- FIG 3: den Ausschnitt B aus Figur 1 in vergrößerter Darstellung,
- FIG 4: den Ausschnitt C aus Figur 1 in vergrößerter Darstellung
- FIG 5: den Ausschnitt D aus Figur 1 in vergrößerter Darstellung,
- FIG 6: einen Deckel, welcher das Gehäuse des Planetengetriebes aus Figur 1 an dessen Antriebsseite bildet, in einer Vorderansicht,
- FIG 7: den Flansch aus Figur 6 in Rückansicht,
- FIG 8: ein Radialgleitlagersegment mit einer Halteplatte,
- FIG 9: ein Ringelement zur Halterung eines Axialgleitlagers,
- FIG 10: eine Drehmomentstütze, die den abtriebsseitigen Teil des Getriebegehäuses des Planetengetriebes aus Figur 1 bildet,
- FIG 11: einen Einsatzring für die Drehmomentstütze aus Figur 10 und
- FIG 12: ein Radialgleitlagersegment zur Verwendung mit der Drehmomentstütze aus Figur 10.

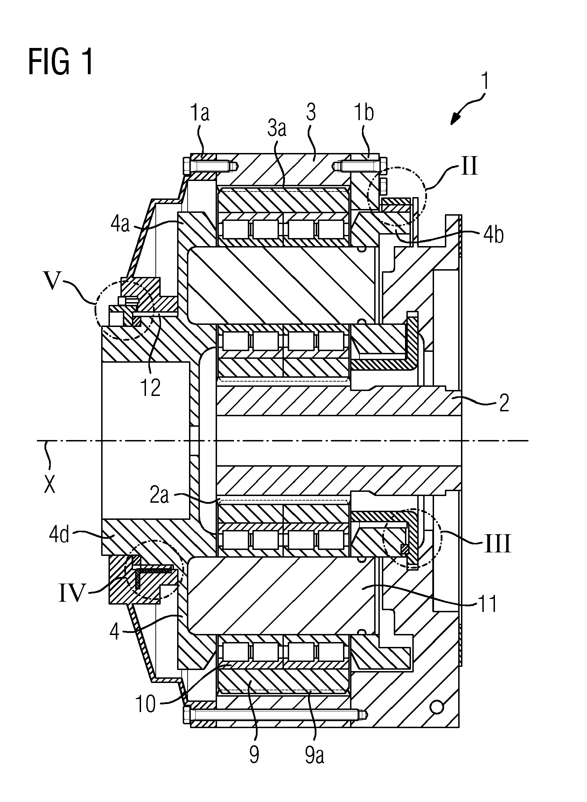

In Figur 1 ist eine Übersetzungsstufe eines Planetengetriebes gemäß einer Ausführungsform der vorliegenden Erfindung dargestellt, das auf dem Turm einer nicht gezeigten Windkraftanlage angeordnet ist und dazu dient, einen Generator durch einen mehrere Flügel tragenden Rotor der Windkraftanlage anzutreiben und dabei die langsame Drehzahl der Rotorwelle bzw. Rotornabe in eine hohe Drehzahl der Generatorwelle umzusetzen. Das Planetengetriebe umfasst ein Getriebegehäuse 1, in dem eine Planetenstufe als eine erste Übersetzungsstufe schließen sich weitere, in der Zeichnung nicht dargestellte Übersetzungsstufen an, die als Stirnrad- oder als Planetenstufe ausgebildet sein können. Die dargestellte erste Planetenstufe des Planetengetriebes umfasst ein zentrales Sonnenrad 2, das in dem Getriebegehäuse 1 um eine zentrale Getriebeachse X rotierbar gehalten ist und eine Außenverzahnung 2a trägt. Zu dem Planetengetriebe gehört ferner ein Hohlrad 3, das konzentrisch zu der zentralen Getriebeachse X fest in dem Getriebegehäuse 1 angeordnet ist und eine Innenverzahnung 3a aufweist.

Ferner umfasst das Planetengetriebe einen Planetenträger 4. Dieses ist in dem Getriebegehäuse 1 über Radial- und Axialgleitlager 5, 6, 7, 8 um die Getriebeachse X drehbar gelagert sowie axial abgestützt und besteht aus zwei parallelen Seitenwangen 4a, 4b, die durch nicht gezeigte Stege miteinander verbunden sind. Schließlich gehören zu dem Planetengetriebe mehrere Planetenräder 9, die über Planetenradlager 10 an dem Planetenträger 4 drehbar gelagert sind und Außenverzahnungen 9a aufweisen, die mit der Innenverzahnung 3a des Hohlrads 3 und der Außenverzahnung 2a des Sonnenrads in Eingriff stehen. In dem Ausführungsbeispiel sind insgesamt vier Planetenräder 9 vorgesehen, die mit 90 Grad Versatz zueinander angeordnet und an parallel zu der zentralen Getriebeachse X verlaufenden Planetenträgerachsen 11, welche sich zwischen den Seitenwangen 4a, 4b des Planetenträgers 4 erstrecken, durch die entsprechenden Planetenradlager 10 drehbar abgestützt sind. Der Planetenträger 4 weist ferner einen als Hohlwelle ausgebildeten Verbindungsabschnitt 4d auf, über welchen der Planetenträger 4 mit der Rotorwelle des Rotors verbunden bzw. verbindbar ist.

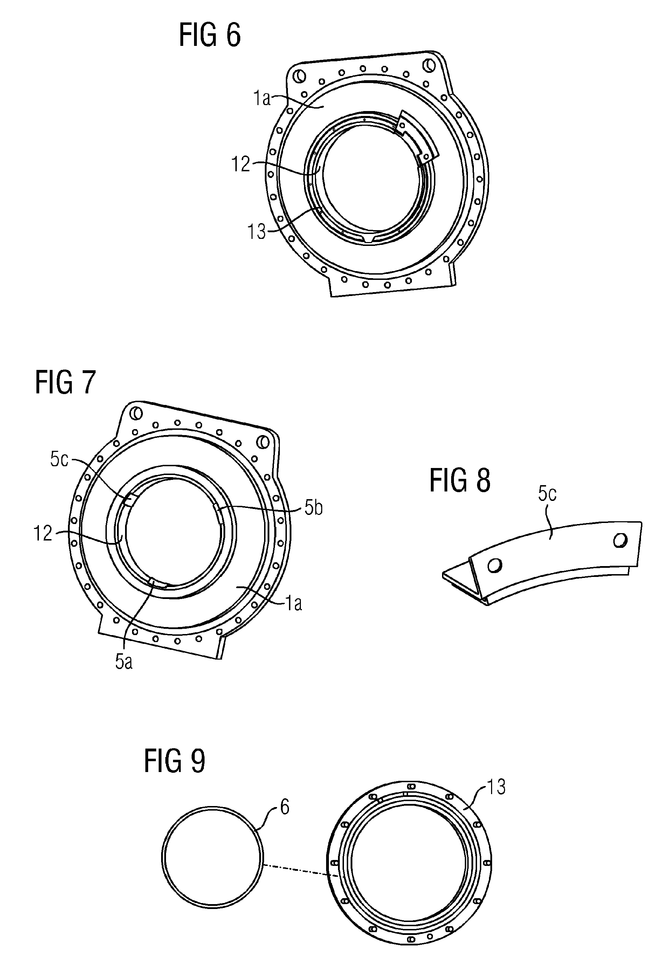

Das Getriebegehäuse 1 umfasst in dem dargestellten Ausführungsbeispiel zwei Gehäuseteile 1a, 1b, zwischen welchen das Hohlrad 3 positioniert und mit denen das Hohlrad 3 fest verbunden ist. Auf der zum Rotor weisenden Antriebsseite des Planetengetriebes ist ein Gehäuseteil in der Form eines Deckels 1a vorgesehen, welcher mit dem Hohlrad 3 verbunden ist und eine zentrale Durchgriffsöffnung 12 für die Hohlwelle 4a des Planetenträgers 4 aufweist. Wie insbesondere die Figuren 7 und 8 erkennen lassen, sind im Bereich der Durchgangsöffnung 12 gleichmäßig entlang des Innenumfangs des Deckels 1a verteilt drei Radialgleitlagersegmente 5a, 5b, 5c befestigt, welche ein Radialgleitlager 5 definieren, über welches der Planetenträger 4 an der Antriebsseite des Planetengetriebes an dem Getriebegehäuse 1 radial abgestützt und drehbar gelagert ist. Die Radialgleitlagersegmente 5a, 5b, 5c besitzen jeweils einen L-förmigen Querschnitt, wobei ein L-Schenkel an der äußeren Stirnseite des Deckels 1a anliegt und mit dieser verschraubt ist, und der andere L-Schenkel eine radiale Gleitfläche definiert und aus einem entsprechenden Gleitmaterial besteht. In der Zeichnung nicht erkennbar ist, dass die Radialgleitlagersegmente 5a, 5b, 5c jeweils an einer Trägerplatte vorgesehen sind, über die sie auch mit dem Deckel 1a verschraubt sind. Dieser Aufbau wird nachfolgend noch anhand der Radialgleitlagersegmente 8a, 8b, 8c des weiteren Radialgleitlagers 8 beschrieben. Ferner ist der Planetenträger 4 an dem Getriebegehäuse 1 auf der Antriebsseite des Planetengetriebes durch ein Axialgleitlager 6, hier einen Axialgleitring abgestützt. Axialgleitlager 6 ist an einem Ringelement 13 gehalten, welches an der Innenseite des Deckels 1a gehalten ist.

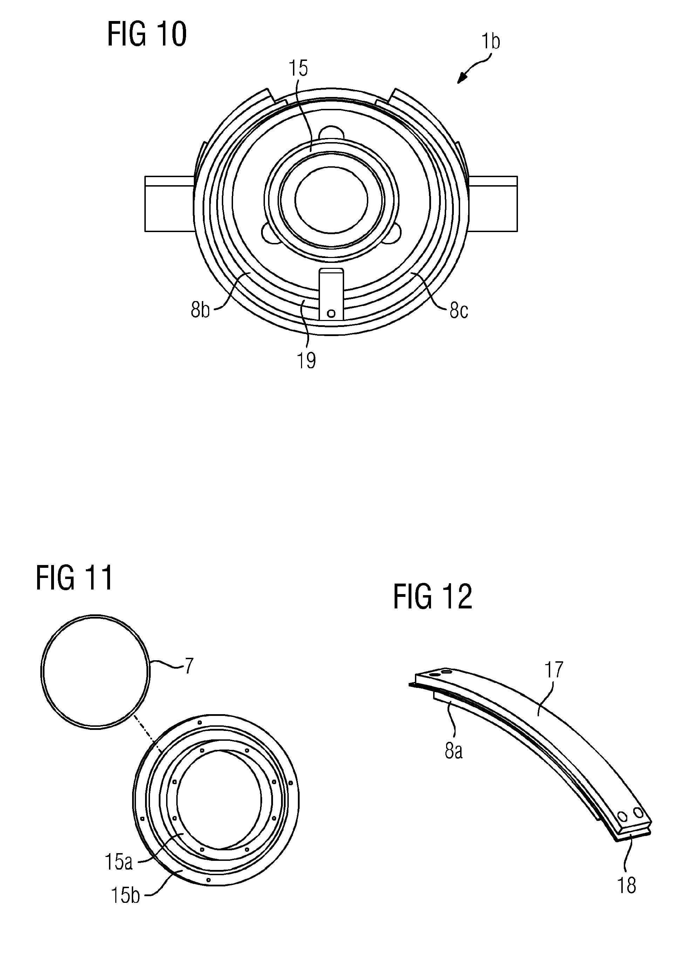

An der Auslassseite des Planetengetriebes wird das Getriebegehäuse 1 durch eine Drehmomentstütze 1b gebildet, wie sie in Figur 10 dargestellt ist. Die Drehmomentstütze 1b ist deckelartig ausgebildet und definiert eine zentrale Durchgangsöffnung 14 für das Sonnenrad 2. Die zentrale Durchgangsöffnung 14 ist hier in einem Einsatzring 15 vorgesehen, welcher in die Drehmomentstütze 1b von der Abtriebsseite des Planetengetriebes her eingesetzt und mit der Drehmomentstütze 1b fest verbunden ist. Der Einsatzring 15 ist L-förmig im Querschnitt ausgebildet und weist einen radialen Schenkel 15a und einen axialen Schenkel 15b auf. Der radiale Schenkel 15a des Einsatzringes 15 steht der abtriebsseitigen Seitenwange 4b des Planetenträgers 4 gegenüber und bildet mit dieser einen definierten radialen Spalt. Dieser stellt sicher, dass der Einsatzring 14 keine Lagerfunktion für den Planetenträger 4 übernehmen kann.

An seiner zum Innenraum des Getriebegehäuses 1 weisenden Fläche trägt der radiale Schenkel 15b des Einsatzrings 15 ein Axialgleitlager 7 in der Form eines Gleitrings, über welchen der Planententräger 4 axial an der Drehmomentstütze 1b abgestützt ist. Radial ist der Planetenträger 4 an der Drehmomentstütze 1b über ein segmentiertes Radialgleitlager 8 abgestützt und gelagert, das drei in Umfangsrichtung beabstandet voneinander angeordnete Radialgleitlagersegmente 8a, 8b, 8c umfasst. Die Abstützung erfolgt hier am Außenumfang des Planetenträgers 4, d.h. an einer Stelle, welche radial außerhalb der Planetenträgerachsen 11 positioniert ist. Die Radialgleitlagersegmente 8a, 8b, 8c des Radialgleitlagers 8 sind an der Außenseite der Drehmomentstütze 1b montiert. Hierzu sind die Radialgleitlagersegmente 8a, 8b, 8c jeweils an der Innenseite einer zugeordneten Trägerplatte 17 montiert, welche außenseitig an dem Getriebegehäuse 1 festgeschraubt ist. Wie insbesondere die Figur 12 gut erkennen lässt, ist zwischen der Trägerplatte 17 und dem zugeordneten Radialgleitlagersegment 8a, 8b, 8c eine Dichtungsplatte 18 vorgesehen. Die Anordnung ist dabei so getroffen, dass die Radialgleitlagersegmente 8a, 8b, 8c radiale Durchbrüche 19 in der Drehmomentstütze 1b nach innen durchgreifen, um in dem Planetenträger 4 in Anlage zu kommen. Nicht dargestellt ist, dass die Position der Radialgleitlagersegmente 8a, 8b, 8c gegenüber dem Getriebegehäuse 1 insbesondere in radialer Richtung einstellbar ist, wozu entsprechende Justiermittel vorgesehen sind.

Ebenfalls nicht dargestellt ist, dass an das Getriebegehäuse 1 über eine außen verlegte Ölleitung eine Ölförderpumpe angeschlossen ist, die aus dem in dem Getriebehause 1 befindlichen Ölsumpf ansaugt und es unter Druck nach einer Filtration und ggf. einer Kühlung in das Getriebegehäuse 1 zurückfördert. Hierzu ist die Ölleitung an einen Ölzulauf des Getriebegehäuses 1 angeschlossen, und innerhalb des Getriebegehäuses sind in den Bauteilen des Planetengetriebes Ölführungskanäle ausgebildet, über welche insbesondere den Gleitlagern 5, 6, 7, 8 und den Planetenradlagern kontinuierlich Schmieröl zugeführt wird. Ebenso sind in den Planetenträgerachsen 11 Ölkanäle ausgebildet, so dass diese ständig von Schmieröl durchströmt und gekühlt werden. Hinsichtlich der konkreten Ausgestaltung wird auf die DE 10 260 132 A1 der Anmelderin verwiesen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Planetengetriebe, insbesondere für eine Windkraftanlage, mit einem Getriebegehäuse (1), einem zentralen Sonnenrad (2), das in dem Getriebegehäuse (1) um eine zentrale Getriebeachse (X) rotierbar gehalten ist und eine Außenverzahnung (2a) trägt, einem Hohlrad (3), das konzentrisch zu der zentralen Getriebeachse (X) in dem Getriebegehäuse (1) angeordnet ist und eine Innenverzahnung (3a) aufweist, einem Planetenträger (4), der in dem Getriebegehäuse (1) um die zentrale Getriebeachse (X) drehbar gelagert ist, und mehreren Planetenrädern (9), die über Planetenradlager (10) an dem Planetenträger (4) um Planetenträgerachsen (11) drehbar gelagert sind und Außenverzahnungen (4a) aufweisen, die mit der Innenverzahnung (3a) des Hohlrads (3) und der Außenverzahnung (2a) des Sonnenrads (2) in Eingriff stehen, **dadurch gekennzeichnet, dass** der Planetenträger (4) über wenigstens ein segmentiertes Radialgleitlager (8) an dem Getriebegehäuse (1) abgestützt ist, das radial außerhalb der Planetenträgerachsen (11) positioniert und in Umfangsrichtung mehrere beanstandet voneinander angeordnete Radialgleitlagersegmente (8a, 8b, 8c) umfasst.

2. Planetengetriebe nach Anspruch 1, **dadurch gekennzeichnet, dass** der Planetenträger (4) auf axial gegenüberliegenden Seiten der Planetenräder an dem Getriebegehäuse (1) gelagert ist und auf der Abtriebsseite des Planetengetriebes über ein segmentiertes Radialgleitlager (8) radial außerhalb der Planetenträgerachsen (11) an dem Getriebegehäuse (1) abgestützt ist.

3. Planetengetriebe nach Anspruch 2, **dadurch gekennzeichnet, dass** die Radialgleitlagersegmente (8a, 8b, 8c) des Radialgleitlagers (8) an der Außenseite des Getriebegehäuses (1) montiert sind und radiale oder axiale Durchbrüche (19) in dem Getriebegehäuse (1) durchgreifend mit dem Planetenträger (4) in Kontakt stehen.

4. Planetengetriebe nach Anspruch 3, **dadurch gekennzeichnet, dass** die Radialgleitlagersegmente (8a, 8b, 8c) jeweils an der Innenseite einer zugeordneten Trägerplatte (17) montiert sind, welche außenseitig an dem Getriebegehäuse (1) montiert, insbesondere festgeschraubt ist.

5. Planetengetriebe nach Anspruch 4, **dadurch gekennzeichnet, dass** zwischen den Trägerplatten (17) und den zugeordneten Radialgleitlagersegmenten (8a, 8b, 8c) Dichtungsplatten (18) vorgesehen sind.

6. Planetengetriebe nach einem der vorherigen Ansprüche, **dadurch gekennzeichnet, dass** die Position der Radialgleitlagersegmente gegenüber dem Getriebegehäuse (1) einstellbar ist und insbesondere Justiermittel zur Einstellung der radialen Position vorgesehen sind.

7. Planetengetriebe nach einem der vorherigen Ansprüche, **dadurch gekennzeichnet, dass** die Radialgleitlagersegmente (8a, 8b, 8c) an einem als Drehmomentstütze (1b) ausgebildeten Bauteil des Getriebegehäuses (1) vorgesehen sind.

8. Planetengetriebe nach einem der vorherigen Ansprüche, **dadurch gekennzeichnet, dass** die Radialgleitlagersegmente ausgebildet und/oder positioniert sind, um den Planetenträger auch axial gegenüber dem Getriebegehäuse abzustützen.

9. Planetengetriebe nach einem der Ansprüche 1 bis 7, **dadurch gekennzeichnet, dass** ein Einsatzring (15) in das Getriebegehäuse (1), insbesondere in das als Drehmomentstütze (1b) ausgebildete Bauteil des Getriebegehäuses (1), von der Abtriebsseite des Planetengetriebes her eingesetzt ist und der Planetenträger (4) an dem Einsatzring (15), insbesondere einem radial nach außen vorstehenden Schenkel (15b)des Einsatzrings (15), durch ein Axialgleitlager (7) axial abgestützt ist.

10. Planetengetriebe nach Anspruch 9, **dadurch gekennzeichnet, dass** das Axialgleitlager (7) als Gleitring ausgebildet ist.

11. Planetengetriebe nach einem der vorherigen Ansprüche, **dadurch gekennzeichnet, dass** der Planetenträger (4) auf der Antriebsseite des Planetengetriebes durch ein segmentiertes Radialgleitlager (5), das mehrere in Umfangsrichtung beabstandet voneinander angeordnete Radialgleitlagersegmente (5a, 5b, 5c) umfasst, an dem Getriebegehäuse (1) abgestützt ist.

12. Planetengetriebe nach Anspruch 11, **dadurch gekennzeichnet, dass** die Radialgleitlagersegmente (5a, 5b, 5c) an dem Getriebegehäuse (1) montiert und insbesondere über Trägerplatten fixiert sind.

13. Planetengetriebe nach Anspruch 12, **dadurch gekennzeichnet, dass** die Radiallagersegmente an einem Deckel (1a) des Getriebegehäuses (1) montiert sind.

14. Planetengetriebe nach einem der vorherigen Ansprüche, **dadurch gekennzeichnet, dass** der Planetenträger (4) an dem Getriebegehäuse (1) auf der Antriebsseite des Planetengetriebes durch ein Axialgleitlager (6), insbesondere einen Axialgleitring abgestützt ist.

15. Planetengetriebe nach Anspruch 14, **dadurch gekennzeichnet, dass** das Axialgleitlager (6) an einem Ringelement gehalten ist, das in das Getriebegehäuse, insbesondere in den Deckel (1a) des Getriebegehäuses (1) eingesetzt ist.
